# EUROPÄISCHE PATENTSCHRIFT

(11) **EP 2 675 671 B1**
(45) Veröffentlichungstag und Bekanntmachung des Hinweises auf die Patenterteilung: **18.01.2017**
(21) Anmeldenummer: 11752544.4
(22) Anmeldetag: 05.09.2011
(51) Int. Cl.: B60T 8/48, B60T 8/26

(54) **HYDRAULISCHE FAHRZEUGBREMSANLAGE**
HYDRAULIC VEHICLE BRAKE SYSTEM
SYSTÈME DE FREINAGE HYDRAULIQUE DE VÉHICULE

(30) Priorität: 04.11.2010 DE 102010043403
(43) Veröffentlichungstag der Anmeldung: 25.12.2013
(73) Patentinhaber: Robert Bosch GmbH, 70442 Stuttgart (DE)
(72) Erfinder: STRENGERT, Stefan, Stuttgart 70469 (DE); KUNZ, Michael, 71711 Steinheim An Der Murr (DE)
(86) Internationale Anmeldenummer: PCT/EP2011/065319
(87) Internationale Veröffentlichungsnummer: WO 2012/059261

(56) Entgegenhaltungen:
- EP-A1- 0 649 781
- EP-A1- 1 535 813
- WO-A1-2009/149977
- WO-A1-2011/104046
- DE-A1- 4 011 329
- DE-A1- 19 604 134
- DE-A1-102006 046 935

## Beschreibung

Die Erfindung betrifft eine hydraulische Fahrzeugbremsanlage mit den Merkmalen des Oberbegriffs des Anspruchs 1.

### Stand der Technik

Hydraulische Fahrzeugbremsanlagen für Kraftwagen weisen üblicherweise einen Zweikreis-Hauptbremszylinder auf, an den hydraulische Radbremsen angeschlossen sind. Dabei sind verschiedene Bremskreisaufteilungen bekannt, wobei Bremskreisaufteilung den Anschluss der einzelnen Radbremsen an die beiden Bremskreise bedeutet. Schlupfgeregelte Fahrzeugbremsanlagen weisen Bremsdruckaufbau- und Bremsdruckabsenkventile auf, mit denen Radbremsdrücke in den Radbremsen steuer- oder regelbar sind. Des weiteren ist in schlupfgeregelten Fahrzeugbremsanlagen in jedem Bremskreis eine Hydropumpe vorhanden. Es erfolgen Bremsblockierschutz-, Antriebsschlupf- und Fahrdynamikregelungen, für die Abkürzungen wie ABS, ASR, FDR und ESP gebräuchlich sind. Die Regelungen sind dem Fachmann bekannt und sollen hier nicht näher erläutert werden.

Die internationale Patentanmeldung WO 2009/149 977 A1 offenbart eine hydraulische Dreikreis-Fahrzeugbremsanlage mit einem Zweikreis-Hauptbremszylinder, an den zwei Bremskreise angeschlossen sind. An diese beiden Bremskreise sind die Radbremsen einer Fahrzeugachse angeschlossen. Der dritte Bremskreis ist ein Fremdkraft-Bremskreis mit einer Hydropumpe zum Bremsdruckaufbau, an die Radbremsen einer anderen Fahrzeugachse angeschlossen sind. Diese Fahrzeugachse weist eine elektrische Maschine auf, die beim Verzögern zur Rückgewinnung von Energie als Generator betrieben wird und Strom in einen Akkumulator speist. Die Energierückgewinnung wird als Rekuperation bezeichnet. Eine Verzögerungswirkung der als Generator betriebenen elektrischen Maschine lässt sich mit dem Fremdkraft-Bremskreis kompensieren. Ebensolche Fahrzeugbremsanlagen offenbaren die Offenlegungsschrift DE 10 2006 046 935 A1 und die nachveröffentlichte internationale Patentanmeldung WO 2011/104 046 A1. Letztere weist unverändert eine hydraulische Trennung beider an den Hauptbremszylinder angeschlossener Bremskreise und in jedem dieser beiden Bremskreise einen Hydrospeicher auf, der in jedem Bremskreis über ein Bremsdruckabsenkventil an die jeweilige Radbremse und an eine Saugseite einer Hydropumpe des jeweiligen Bremskreises angeschlossen ist. Durch Rückschlagventile und ein gemeinsames Verbindungsventil sind die Saugseiten der Hydropumpen und die Hydrospeicher an einen drucklosen, auf den Hauptbremszylinder aufgesetzten Bremsflüssigkeitsvorratsbehälter angeschlossen.

Aus der Europäischen Patentanmeldung EP 1 535 813 A1 und der Deutschen Offenlegungsschrift DE 40 11 329 A1 ist die grundsätzliche Möglichkeit bekannt, eine Hydropumpe in einem Bremskreis einer hydraulischen Fahrzeugbremsanlage über ein Ansaugventil an einen Bremsflüssigkeitsvorratsbehälter anzuschließen, wobei die Europäische Patentanmeldung zusätzlich die Möglichkeit offenbart, das nur in einem von zwei Bremskreisen zu tun. Es handelt sich um herkömmliche Zweikreis-Fahrzeugbremsanlagen, bei denen alle Bremskreise an den Hauptbremszylinder angeschlossen sind.

### Offenbarung der Erfindung

Die erfindungsgemäße hydraulische Fahrzeugbremsanlage mit den Merkmalen des Anspruchs 1 weist drei Bremskreise auf, von denen zwei Bremskreise an einen Zweikreis-Hauptbremszylinder angeschlossen sind und eine Hydropumpe aufweisen. Der dritte Bremskreis weist ebenfalls eine Hydropumpe zum Bremsdruckaufbau auf, ist aber nicht an den Hauptbremszylinder angeschlossen. Die an den Hauptbremszylinder angeschlossenen Bremskreise können auch als Muskel- oder Hilfskraft-Bremsanlagen, der nicht an den Hauptbremszylinder angeschlossene weitere Bremskreis als Fremdkraft-Bremskreis aufgefasst werden. Eine Schlupfregelung ist zwar nicht zwingend jedoch vorzugsweise vorgesehen. An die beiden an den Hauptbremszylinder angeschlossenen Bremskreise sind die Radbremsen einer Fahrzeugachse angeschlossen, es ist also die Radbremse des linken Rads einer Fahrzeugachse an den einen Bremskreis und die Radbremse des rechten Rads derselben Fahrzeugachse an den anderen Bremskreis des Hauptbremszylinders angeschlossen. An den weiteren Bremskreis ist mindestens eine Radbremse eines Rads einer anderen Fahrzeugachse angeschlossen, vorzugsweise sind alle Radbremsen der anderen Fahrzeugachse an den weiteren Bremskreis angeschlossen.

Die erfindungsgemäße Fahrzeugbremsanlage lässt sich mit verhältnismäßig einfachen Modifikationen einer herkömmlichen, schlupfgeregelten Fahrzeugbremsanlage verwirklichen. Sie ist insbesondere für Elektro- oder Hybridfahrzeuge vorgesehen, also für Kraftfahrzeuge, die einen (oder mehrere) Antriebs-Elektromotoren oder allgemein eine (oder mehrere) elektrische Maschinen, genau genommen rotierende elektrische Maschinen, aufweisen, die als Generator betreibbar sind und dabei elektrische Energie erzeugen, die in einem Akkumulator gespeichert wird und für einen Antrieb des Fahrzeugs zur Verfügung steht. Zu den elektrischen Maschinen zählen außer Elektromotoren auch Generatoren. Beim Bremsen wird die elektrische Maschine als Generator betrieben und erzeugt ein Bremsmoment. Es ist möglich, dass ein Fahrzeugführer das Bremsmoment der elektrischen Maschine ausgleicht. Für komfortablere Systeme wird das Bremsmoment der elektrischen Maschine im Generatorbetrieb teilweise oder vollständig durch eine Verringerung der Bremskraft der Fahrzeugbremsanlage kompensiert. Die Kompensation des Bremsmoments der elektrischen Maschine im Generatorbetrieb durch Verringerung der Bremskraft der Fahrzeugbremsanlage wird auch als Verblenden bezeichnet. Ein qualitativ gutes Verblenden, bei dem ein Fahrzeugführer die Wirkung der elektrischen Maschine im Generatorbetrieb nicht oder kaum merkt, ist aufwändig und schwierig. Die Erfindung ermöglicht ein qualitativ gutes Verblenden vergleichsweise einfach durch Steuerung bzw. Regelung des Bremsdrucks im weiteren-, Fremdkraft-Bremskreis, der nicht an den Hauptbremszylinder angeschlossen ist.

Die Saugseiten der Hydropumpen der beiden an den Hauptbremszylinder angeschlossenen Bremskreise sind gemeinsam an einen Hydrospeicher und durch ein Verbindungsventil an einen Bremsflüssigkeitsvorratsbehälter angeschlossen. Erstere Maßnahme erspart einen Hydrospeicher in jedem Bremskreis und durch letztere Maßnahme ist ein Bremsdruckaufbau mit den Hydropumpen der an den Hauptbremszylinder angeschlossenen Bremskreise auch bei nicht betätigtem Hauptbremszylinder möglich, was beispielsweise für eine Antriebsschlupfregelung und teilweise für eine Fahrdynamikregelung notwendig ist. Bei einer Antriebsschlupfregelung, die durchdrehenden Antriebsrädern entgegenwirkt, wird normalerweise ein Gaspedal und nicht ein Bremspedal betätigt. Eine Fahrdynamikregelung, die einem Schleudern eines Fahrzeugs entgegenwirkt, kann sowohl bei nicht betätigtem- als auch bei betätigtem Bremspedal erfolgen.

Die Unteransprüche haben vorteilhafte Ausgestaltungen und Weiterbildungen der im Anspruch 1 angegebenen Erfindung zum Gegenstand.

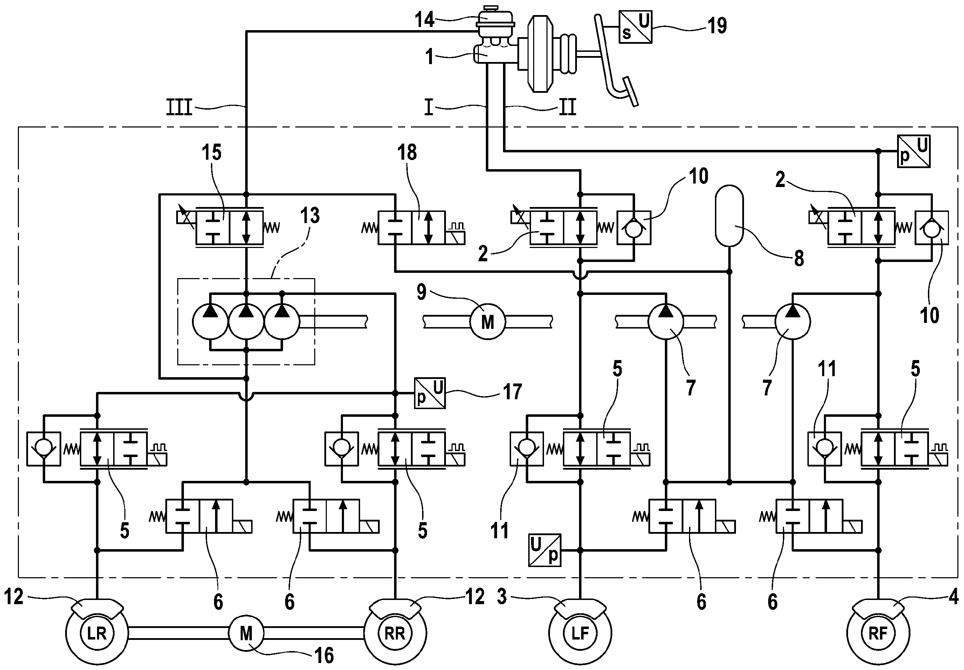

### Kurze Beschreibung der Zeichnung

Die Erfindung wird nachfolgend anhand eines in der Zeichnung dargestellten Ausführungsbeispiels näher erläutert. Die einzige Figur zeigt einen Hydraulikschaltplan einer erfindungsgemäßen Fahrzeugbremsanlage.

### Ausführungsform der Erfindung

Die in der Zeichnung dargestellte, erfindungsgemäße hydraulische Fahrzeugbremsanlage weist einen Zweikreis-Hauptbremszylinder 1 auf, an den über Trennventile 2 zwei Bremskreise I, II angeschlossen sind. An jeden der beiden Bremskreise I, II ist eine hydraulische Radbremse 3, 4 einer Fahrzeugachse angeschlossen. Im Ausführungsbeispiel sind die Radbremsen 3, 4 einer Vorderachse an die beiden Bremskreise I, II angeschlossen, die an den Hauptbremszylinder 1 angeschlossen sind. Es ist allerdings nicht zwingend für die Erfindung, dass die Radbremsen der Vorderachse an den Hauptbremszylinder 1 angeschlossen sind. Die Bremskreise I, II weisen für jede Radbremse 3, 4 ein Bremsdruckaufbauventil 5 auf, durch das die Radbremse 3, 4 mit dem Trennventil 2 verbunden ist, und ein Bremsdruckabsenkventil 6, durch das die Radbremse 3, 4 an die Saugseite einer Hydropumpe 7 und an einen Hydrospeicher 8 angeschlossen ist. Es ist in jedem der beiden an den Hauptbremszylinder 1 angeschlossenen Bremskreise I, II eine Hydropumpe 7 vorhanden, die mit einem gemeinsamen Elektromotor 9 antreibbar sind. Druckseiten der Hydropumpen 7 sind zwischen den Trennventilen 2 und den Bremsdruckaufbauventilen 5 angeschlossen.

Die Trennventile 2, die Bremsdruckaufbauventile 5 und die Bremsdruckabsenkventile 6 sind 2/2-Wege-Magnetventile, wobei die Trennventile 2 und die Bremsdruckaufbauventile 5 in ihren stromlosen Grundstellungen offen und die Bremsdruckabsenkventile 6 in ihren stromlosen Grundstellungen geschlossen sind. Die Trennventile 2 und die Bremsdruckaufbauventile 6 sind Proportionalventile, ihnen sind Rückschlagventile 10, 11 hydraulisch parallel geschaltet, wobei die Rückschlagventile 10 der Trennventile 2 in Richtung vom Hauptbremszylinder 1 zu den Radbremsen 3, 4 und die Rückschlagventile 11 der Bremsdruckaufbauventile 5 umgekehrt von den Radbremsen 3, 4 in Richtung des Hauptbremszylinders 1 durchströmbar sind.

Die Bremsdruckaufbauventile 5 und Bremsdruckabsenkventile 6 bilden Radbremsdruckmodulationsventilanordnungen, mit ihnen und den Hydropumpen 7 ist eine radindividuelle Bremsdruckmodulation zu einer Schlupfregelung möglich. Solche Schlupfregelungen sind beispielsweise als Bremsblockierschutz-, Antriebsschlupf- und/oder Fahrdynamikregelungen bekannt und sollen hier nicht näher erläutert werden. Für diese Schlupfregelungen sind die Abkürzungen ABS, ASR, FDR und ESP gebräuchlich.

Radbremsen 12 einer anderen Fahrzeugachse, im Ausführungsbeispiel also der Hinterachse, sind an einen weiteren Bremskreis III angeschlossen, der nicht an den Hauptbremszylinder 1 angeschlossen ist. Der weitere Bremskreis III wird per Fremdkraft betätigt, er weist eine Hydropumpe 13 zum Bremsdruckaufbau auf. Die Hydropumpe 13 wird mit demselben Elektromotor 9 wie die Hydropumpen 7 der Bremskreise I, II angetrieben. Denkbar ist auch ein eigener Elektromotor für die Hydropumpe 13 des weiteren Bremskreis III (nicht dargestellt). Als Hydropumpen 7, 13 weist das dargestellte Ausführungsbeispiel der Erfindung eine Mehrkolbenpumpe mit fünf Pumpenkolben auf, von denen je ein Pumpenkolben die Hydropumpen 7 der an den Hauptbremszylinder 1 angeschlossenen Bremskreise I, II bilden und die weiteren drei Pumpenkolben einander hydraulisch parallel geschaltet sind und gemeinsam die Hydropumpe 13 des nicht an den Hauptbremszylinder 1 angeschlossenen weiteren Bremskreis III bilden.

Eine Saugseite der Hydropumpe 13 des weiteren Bremskreis III ist an einen (drucklosen) Bremsflüssigkeitsvorratsbehälter 14 angeschlossen, der beispielsweise auf den Hauptbremszylinder 1 aufgesetzt sein kann. Auf einer Druckseite der Hydropumpe 13 sind über Bremsdruckaufbauventile, die hier ebenfalls mit der Bezugszahl 5 gekennzeichnet sind, die Radbremsen 12 angeschlossen. Über Bremsdruckabsenkventile 6 sind die Radbremsen 12 mit der Saugseite der Hydropumpe 13 verbunden. Auf den radabgewandten Seiten der Bremsdruckabsenkventile 6 und der Saugseite der Hydropumpe 13 ist, anders als in den Bremskreisen I, II, im weiteren Bremskreis III kein Hydrospeicher vorgesehen, auch wenn ein solcher von der Erfindung nicht ausgeschlossen ist. Die Bremsdruckaufbauventile 5 und die Bremsdruckabsenkventile 6 bilden Radbremsdruckmodulationsventilanordnungen, mit denen zusammen mit der Hydropumpe 13 eine Schlupfregelung in an sich bekannter Weise möglich ist. Die Bremsdruckaufbauventile 5 und die Bremsdruckabsenkventile 6 sind 2/2-Wege-Magnetventile, die Bremsdruckaufbauventile 5 sind in ihrer stromlosen Grundstellung offen, die Bremsdruckabsenkventile 6 sind in ihrer stromlosen Grundstellung geschlossen, die Bremsdruckaufbauventile 5 sind Proportionalventile.

Die Druckseite der Hydropumpe 13 des weiteren Bremskreis III ist über ein Bremsdruckregelventil 15 an den Bremsflüssigkeitsvorratsbehälter 14 angeschlossen. Das Bremsdruckregelventil 15 ist ein in seiner Grundstellung offenes 2/2-Wege-Proportional-Magnetventil. Mit ihm wird ein Radbremsdruck der an den weiteren Bremskreis III angeschlossenen Radbremsen 12 gemeinsam geregelt bei einer Bremsung ohne Schlupfregelung oder auch während einer Schlupfregelung.

Fahrzeugräder der Radbremsen 12, die an den weiteren Bremskreis III angeschlossen sind, weisen einen Elektro-Antriebsmotor 16 auf, der allgemein auch als elektrische Maschine aufgefasst werden kann. Bei einer Bremsung wird der Elektromotor 16 als Generator betrieben, um Strom zu erzeugen, der in einem Akkumulator gespeichert wird und zum Antrieb des Fahrzeugs zur Verfügung steht. Die Bremskraft der Radbremsen 12 wird entsprechend einem Bremsmoment des Elektromotors 16 im Generatorbetrieb verringert, es wird also das Bremsmoment des Elektromotors 16 im Generatorbetrieb kompensiert, so dass für einen Fahrzeugführer nicht oder kaum spürbar ist, dass ein Teil der Bremsleistung vom Elektromotor 16 im Generatorbetrieb erzeugt und die Bremskraft im zugeordneten weiteren Bremskreis III entsprechend verringert wird. Zur Bremsdruckregelung ist ein Drucksensor 17 auf der Druckseite der Hydropumpe 13 angeschlossen.

Über ein Verbindungsventil 18 sind die beiden an den Hauptbremszylinder 1 angeschlossenen Bremskreise I, II an den Bremsflüssigkeitsvorratsbehälter 14 angeschlossen. Es sind der Hydrospeicher 8, die Saugseiten der Hydropumpen 7 und die den Radbremsen 3, 4 abgewandten Seiten der Bremsdruckabsenkventile 6 an das Verbindungsventil 18 angeschlossen. Das Verbindungsventil 18 ist ein in seiner Grundstellung geschlossenes 2/2-Wege-Magnetventil. Indem es geöffnet wird, werden die Saugseiten der Hydropumpen 7 der an den Hauptbremszylinder 1 angeschlossenen Bremskreise I, II mit dem Bremsflüssigkeitsvorratsbehälter 14 verbunden, so dass ein Bremsdruckaufbau mit den Hydropumpen 7 in den an den Hauptbremszylinder 1 angeschlossenen Bremskreisen I, II auch dann möglich ist, wenn der Hauptbremszylinder 1 nicht betätigt wird. Das ist beispielsweise für eine Antriebsschlupfregelung und teilweise für eine Fahrdynamikregelung notwendig.

Um zu verhindern, dass bei einem kleinen Betätigungsweg des Hauptbremszylinders 1, hier als Pedalweg bezeichnet, die Radbremsen 3, 4 der an den Hauptbremszylinder 1 angeschlossenen Bremskreise I, II betätigt werden, werden zu Beginn einer Bremsung die Bremsdruckabsenkventile 6 der Bremskreise I, II geöffnet. Das Verbindungsventil 18 wird ebenfalls geöffnet. Die Radbremsen 3, 4 bleiben folglich drucklos, eine Verzögerung erfolgt durch den Elektromotor 16 im Generatorbetrieb und/oder durch Fremdkraftbetätigung der Radbremsen 12, die an den weiteren Bremskreis III angeschlossen sind, der nicht an den Hauptbremszylinder 1 angeschlossen ist. Der Bremsdruckaufbau erfolgt mit der Hydropumpe 13 des weiteren Bremskreis III. Erst ab einem bestimmten, vorgegebenen Pedalweg werden die Bremsdruckabsenkventile 6 der an den Hauptbremszylinder 1 angeschlossenen Bremskreise I, II geschlossen und die Radbremsen 3, 4 hydraulisch mit dem Hauptbremszylinder 1 betätigt. Durch das Öffnen der Bremsdruckabsenkventile 6 in den an den Hauptbremszylinder 1 angeschlossenen Bremskreisen I, II wird ein Leerweg des Hauptbremszylinders 1 verlängert, also ein Pedalweg zu Beginn einer Bremsung, während dem im Hauptbremszylinder 1 kein Druck aufgebaut und infolge dessen die Radbremsen 3, 4 nicht betätigt werden. Bei einem Fehler oder Ausfall einer Steuerelektronik bleiben die Bremsdruckabsenkventile 6 geschlossen, so dass der Leerweg des Hauptbremszylinders 1 nicht verlängert wird. Zur Steuerung bzw. Regelung des Leerwegs ist ein Pedalwegsensor 19 vorhanden.

## Patentansprüche

1. Hydraulische Fahrzeugbremsanlage, mit einem Bremsflüssigkeitsvorratsbehälter (14), mit einem Zweikreis-Hauptbremszylinder (1), an dessen einen Bremskreis I eine Radbremse (3) auf einer Seite einer Fahrzeugachse und an dessen anderen Bremskreis II eine Radbremse (4) auf einer anderen Seite der einen Fahrzeugachse angeschlossen ist, wobei jeder der beiden Bremkreise I, II über ein Trennventil (2) an den Zweikreis-Hauptbremszylinder (1) angeschlossen ist und in jedem der beiden an den Hauptbremszylinder (1) angeschlossenen Bremskreise I, II die Radbremsen (3, 4) durch ein Bremsdruckaufbauventil (5) mit dem Trennventil (2) verbunden und durch ein Bremsdruckabsenkventil (6) an eine Saugseite einer Hydropumpe (7) in jedem der beiden an den Hauptbremszylinder (1) angeschlossenen Bremskreise I, II angeschlossen ist, und mit einem weiteren Bremskreis III, der nicht an den Hauptbremszylinder (1) angeschlossen ist und der eine Hydropumpe (13) aufweist, an die mindestens eine Radbremse (12) einer anderen Fahrzeugachse angeschlossen ist, **dadurch gekennzeichnet, dass** in den beiden Bremskreisen I, II, die an den Hauptbremszylinder (1) angeschlossen sind, die Radbremsen (3, 4) über die Bremsdruckabsenkventile (6) und die Saugseiten der Hydropumpen (7) gemeinsam an einen Hydrospeicher (8) angeschlossen sind, und dass die Saugseiten der Hydropumpen (7) über ein gemeinsames Verbindungsventil (18) an den Bremsflüssigkeitsvorratsbehälter (14) angeschlossen sind.

2. Hydraulische Fahrzeugbremsanlage nach Anspruch 1, **dadurch gekennzeichnet, dass** die Radbremsen (3, 4) einer Vorderachse eines Fahrzeugs an den Hauptbremszylinder (1) und die mindestens eine Radbremse (12) einer Hinterachse an die Hydropumpe (13) des weiteren Bremskreis III angeschlossen sind.

3. Hydraulische Fahrzeugbremsanlage nach Anspruch 1, **dadurch gekennzeichnet, dass** die Radbremsen (12) einer Fahrzeugachse, deren Räder mit einer elektrischen Maschine (16) bremsbar sind, an die Hydropumpe (13) des weiteren Bremskreis III angeschlossen sind.

4. Hydraulische Fahrzeugbremsanlage nach Anspruch 1, **dadurch gekennzeichnet, dass** die Hydropumpe (13) eine Mehrkolbenpumpe ist, und dass mindestens zwei Pumpenkolben der Hydropumpe (13) dem weiteren Bremskreis III zugeordnet sind und die mindestens eine Radbremse (12) der anderen Fahrzeugachse an die mindestens zwei Pumpenkolben angeschlossen ist.

5. Hydraulische Fahrzeugbremsanlage nach Anspruch 1, **dadurch gekennzeichnet, dass** mindestens eine der Radbremsen (3, 4) der einen Fahrzeugachse, die an den Hauptbremszylinder (1) angeschlossen sind, über ein Verbindungsventil (18) an den Bremsflüssigkeitsvorratsbehälter (14) und an eine Saugseite der Hydropumpe (13) des weiteren Bremskreis III angeschlossen ist, der nicht an den Hauptbremszylinder (1) angeschlossen ist.

6. Hydraulische Fahrzeugbremsanlage nach Anspruch 5, **dadurch gekennzeichnet, dass** zu Beginn einer Bremsbetätigung die Bremsdruckabsenkventile (6) der an den Hauptbremszylinder (1) angeschlossenen Radbremsen (3, 4) und das Verbindungsventil (18) geöffnet werden.

7. Hydraulische Fahrzeugbremsanlage nach Anspruch 1, **dadurch gekennzeichnet, dass** der nicht an den Hauptbremszylinder (1) angeschlossene weitere Bremskreis III ein Bremsdruckregelventil (15) aufweist.

## Claims

1. Hydraulic vehicle brake system, having a brake fluid reservoir (14), having a dual-circuit brake master cylinder (1), to one brake circuit I of which a wheel brake (3) at one end of a vehicle axle is connected and to the other brake circuit II of which a wheel brake (4) at another end of the same vehicle axle is connected, wherein each of the two brake circuits I, II is connected via an isolating valve (2) to the dual-circuit brake master cylinder (1), and, in each of the two brake circuits I, II connected to the brake master cylinder (1), the wheel brakes (3, 4) is connected by way of a brake pressure buildup valve (5) to the isolating valve (2) and is connected by way of a brake pressure reducing valve (6) to an intake side of a hydraulic pump (7) in each of the two brake circuits I, II connected to the brake master cylinder (1), and having an additional brake circuit III, which is not connected to the brake master cylinder (1) and which has a hydraulic pump (13), to which at least one wheel brake (12) of another vehicle axle is connected, **characterized in that,** in the two brake circuits I, II which are connected to the brake master cylinder (1), the wheel brakes (3, 4), via the brake pressure reducing valves (6), and the intake sides of the hydraulic pumps (7) are connected jointly to a hydraulic accumulator (8), and **in that** the intake sides of the hydraulic pumps (7) are connected by way of a common connecting valve (18) to the brake fluid reservoir (14).

2. Hydraulic vehicle brake system according to Claim 1, **characterized in that** the wheel brakes (3, 4) of a front axle of a vehicle are connected to the brake master cylinder (1), and the at least one wheel brake (12) of a rear axle is connected to the hydraulic pump (13) of the additional brake circuit III.

3. Hydraulic vehicle brake system according to Claim 1, **characterized in that** the wheel brakes (12) of a vehicle axle, the wheels of which can be braked by an electric machine (16), are connected to the hydraulic pump (13) of the additional brake circuit III.

4. Hydraulic vehicle brake system according to Claim 1, **characterized in that** the hydraulic pump (13) is a multi-piston pump, and **in that** at least two pump pistons of the hydraulic pump (13) are assigned to the additional brake circuit III, and the at least one wheel brake (12) of the other vehicle axle is connected to the at least two pump pistons.

5. Hydraulic vehicle brake system according to Claim 1, **characterized in that** at least one of the wheel brakes (3, 4) of one vehicle axle which are connected to the brake master cylinder (1) is connected via a connecting valve (18) to the brake fluid reservoir (14) and to an intake side of the hydraulic pump (13) of the additional brake circuit III, which is not connected to the brake master cylinder (1).

6. Hydraulic vehicle brake system according to Claim 5, **characterized in that** the connecting valve (18) and the brake pressure reducing valves (6) of the wheel brakes (3, 4) connected to the brake master cylinder (1) are opened at the beginning of a brake actuation.

7. Hydraulic vehicle brake system according to Claim 1, **characterized in that** the additional brake circuit III, which is not connected to the brake master cylinder (1), has a brake pressure control valve (15).

## Revendications

1. Système de freinage hydraulique de véhicule, comprenant un réservoir de liquide de frein (14), un cylindre de frein principal à deux circuits (1) au niveau d'un circuit de freinage I duquel un frein de roue (3) est raccordé d'un côté d'un essieu du véhicule et au niveau d'un autre circuit de freinage II duquel un frein de roue (4) est raccordé sur un autre côté d'un essieu du véhicule, chacun des deux circuits de freinage I, II étant raccordé par le biais d'une soupape de séparation (2) au cylindre de frein principal à deux circuits (1) et dans chacun des deux circuits de freinage I, II raccordés au cylindre de frein principal (1), les freins de roue (3, 4) étant connectés par le biais d'une soupape d'augmentation de la pression de freinage (5) à la soupape de séparation (2) et par une soupape de diminution de la pression de freinage (6) à un côté aspiration d'une pompe hydraulique (7) dans chacun des deux circuits de freinage I, II raccordés au cylindre de frein principal (1), et un circuit de freinage supplémentaire III qui n'est pas raccordé au cylindre de frein principal (1) et qui présente une pompe hydraulique (13) à laquelle est raccordé au moins un frein de roue (12) d'un autre essieu du véhicule, **caractérisé en ce que** dans les deux circuits de freinage I, II qui sont raccordés au cylindre de frein principal (1), les freins de roue (3, 4) sont raccordés par le biais des soupapes de diminution de pression de freinage (6) et des côtés d'aspiration des pompes hydrauliques (7), en commun à un accumulateur hydraulique (8) et **en ce que** les côtés d'aspiration des pompes hydrauliques (7) sont raccordés par le biais d'une soupape de liaison commune (18) au réservoir de liquide de frein (14).

2. Système de freinage hydraulique de véhicule selon la revendication 1, **caractérisé en ce que** les freins de roue (3, 4) d'un essieu avant d'un véhicule sont raccordés au cylindre de frein principal (1) et l'au moins un frein de roue (12) d'un essieu arrière est raccordé à la pompe hydraulique (13) du circuit de freinage supplémentaire III.

3. Système de freinage hydraulique de véhicule selon la revendication 1, **caractérisé en ce que** les freins de roue (12) d'un essieu de véhicule dont les roues peuvent être freinées avec un moteur électrique (16) sont raccordés à la pompe hydraulique (13) du circuit de freinage supplémentaire III.

4. Système de freinage hydraulique de véhicule selon la revendication 1, **caractérisé en ce que** la pompe hydraulique (13) est une pompe à plusieurs pistons et **en ce qu'**au moins deux pistons de pompe de la pompe hydraulique (13) sont associés au circuit de freinage supplémentaire III et l'au moins un frein de roue (12) de l'autre essieu du véhicule est raccordé aux au moins deux pistons de pompe.

5. Système de freinage hydraulique de véhicule selon la revendication 1, **caractérisé en ce qu**'au moins l'un des freins de roue (3, 4) d'un essieu du véhicule, qui sont raccordés au cylindre de frein principal (1), est raccordé par le biais d'une soupape de liaison (18) au réservoir de liquide de frein (14) et à un côté d'aspiration de la pompe hydraulique (13) du circuit de freinage supplémentaire III qui n'est pas raccordé au cylindre de frein principal (1).

6. Système de freinage hydraulique de véhicule selon la revendication 5, **caractérisé en ce qu**'au début d'un actionnement du frein, les soupapes de diminution de la pression de freinage (6) des freins de roue (3, 4) raccordés au cylindre de frein principal (1) et la soupape de liaison (18) sont ouvertes.

7. Système de freinage hydraulique de véhicule selon la revendication 1, **caractérisé en ce que** le circuit de freinage supplémentaire III non raccordé au cylindre de frein principal (1) présente une soupape de régulation de la pression de freinage (15).
